## Europäisches Patentamt
## European Patent Office
## Office européen des brevets

(19)

(11) Veröffentlichungsnummer: **0 087 727**
**B1**

(12)

# EUROPÄISCHE PATENTSCHRIFT

(45) Veröffentlichungstag der Patentschrift:
**13.05.87**

(51) Int. Cl.⁴: **H 05 B 6/10**

(21) Anmeldenummer: **83101678.7**

(22) Anmeldetag: **22.02.83**

(54) Gerät zur Erwärmung eines strömenden Mediums.

(30) Priorität: **27.02.82 DE 3207436**

(43) Veröffentlichungstag der Anmeldung:
**07.09.83 Patentblatt 83/36**

(45) Bekanntmachung des Hinweises auf die Patenterteilung:
**13.05.87 Patentblatt 87/20**

(84) Benannte Vertragsstaaten:
**AT CH FR GB LI**

(56) Entgegenhaltungen:
**DE - A - 2 430 943**

**H. Fahlenbrach, W. Baran, Dauermagnete und ihre Anwendung in Betrieben, Carl Hanser Verlag, München 1965, Seiten 51-53**

**Die Akte enthält technische Angaben, die nach dem Eingang der Anmeldung eingereicht wurden und die nicht in dieser Patentschrift enthalten sind.**

(73) Patentinhaber: **Franz Klaus Union Armaturen Pumpen GmbH & Co., Blumenfeldstrasse 18, D-4630 Bochum 1 (DE)**

(72) Erfinder: **Fichtner, Hans E., Langen Donk 127, D-4150 Krefeld (DE)**
Erfinder: **Klaus, Franz, Dürerstrasse 12, D-4630 Bochum 1 (DE)**

(74) Vertreter: **Patentanwälte Wenzel & Kalkoff, Ruhrstrasse 26 Postfach 2448, D-5810 Witten (DE)**

## Beschreibung

Die Erfindung betrifft ein Gerät zur Erzeugung eines strömenden Mediums, mit einer zylinderförmigen, feststehenden Zwischenwand aus einem elektrisch leitenden Material, mit einer Anordnung von auf die Zwischenwand gerichteten Permanentmagneten jeweils auf der Aussenseite und der Innenseite der Zwischenwand und mit einem gesonderten Träger für jede Permanentmagnetanordnung, von denen einer mit einem rotierenden Antrieb verbunden ist, durch dessen Drehung in der von dem zu erwärmenden Medium überströmten Zwischenwand infolge von Wirbelströmen eine Erwärmung eintritt.

Geräte und Aggregate zur Erwärmung eines strömenden Mediums sind in der verschiedensten Form bekannt. In vielen Haushalten und in der Industrie sind zum Beispiel mit Gas oder Elektrizität beheizte Durchlauferhitzer oder Boiler im Einsatz, bei denen entweder über die Durchlaufmenge pro Zeiteinheit oder durch Zu- und Abschalten des Energieträgers eine vorgegebene Temperatur für das Medium eingehalten wird. Seltener sind mechanisch betriebene Geräte bzw. Aggregate zur Erwärmung strömender Medien, die entweder die innere Reibung beispielsweise einer Flüssigkeit zur Erwärmung ausnutzen oder die Erscheinung von sogenannten Wirbelströmen, die innerhalb eines Leiters entstehen, wenn er einem wechselnden magnetischen Feld ausgesetzt und selbst elektrisch leitend ist.

Ein derartiges Gerät ist in der DE-A1 2 430 943 beschrieben. Zur Hervorrufung der Wirbelströme wird die innere Magnetanordnung gegenüber der feststehenden äusseren Magnetanordnung in Drehung versetzt; gemäss einem weiteren Vorschlag aus dieser Druckschrift wird auch die äussere Magnetanordnung motorisch gegenüber der inneren bewegt, also beide Magnetanordnungen mit Hilfe von Antrieben gegensinnig in Drehung versetzt. Es soll dadurch erreicht werden, dass an jeder Stelle der Zwischenwand in zeitlicher Abfolge schwankende Magnetfeldstärken eintreten, die zur Bildung der Wirbelströme führen. Der angetriebene Träger der Magnetanordnung bzw. beide Träger haben wegen der wechselweise aneinander vorbeiwandernden Pole das Bestreben, sich dem Antrieb zu widersetzen und dann dem Antrieb vorzueilen.

Es ist Aufgabe der Erfindung, ein Gerät bzw. ein Aggregat zur Erwärmung eines strömenden Mediums vorzuschlagen, das jeweils annähernd trägheitslos regelbar ist und das für Medien aller Art geeignet ist, also auch für explosive und unverträgliche Stoffe.

Zur Lösung dieser Aufgabe schlägt die Erfindung vor, dass der als Treiber ausgebildete Träger der äusseren Permanentmagnetanordnung mit dem Antrieb verbunden ist, und dass der als Läufer ausgebildete Träger der inneren Permanentmagnetanordnung frei drehbar gelagert ist und infolge der Magnetkräfte synchron mit dem Treiber nach Art von üblichen Permanentmagnetkupplungen umläuft.

Die Anströmung des gasförmigen oder flüssigen Mediums kann zu beiden Seiten der Zwischenwand erfolgen. Bei Medien, die nach vollständig gekapselten und stopfbuchslosen Geräten verlangen, kommt die Anströmung von nur einer Seite in Frage. Die Hintergründe hierfür werden weiter unten noch näher erläutert.

Als Zwischenwand kommt hauptsächlich Kupfer oder Aluminium in Frage, insbesondere für chemische Anwendungsfälle können auch andere Materialien bereitgehalten werden, soweit sie das Erfordernis eines geringen elektrischen Widerstandes mit dem guter chemischer Beständigkeit zu vereinbaren vermögen. Zur Verbesserung des Wärmeüberganges von der Zwischenwand auf das Medium können an ersterer Rippen, Schraubengänge oder sonstige oberflächenvergrössernde Massnahmen vorgenommen werden, es ist jedoch stets darauf zu achten, dass dadurch die Trägheit für den Regelvorgang nicht zu stark zunimmt. Im übrigen kann die Regelung auf unterschiedliche Weise vorgenommen werden. In der einfachsten Form wird die Drehzahl des Antriebsmotors direkt oder über ein Zwischengetriebe mit stufenlos veränderbarer Drehzahlregelung dem Temperaturbedarf angepasst. Für sehr präzise Regelvorgänge kann es zweckmässig sein, als Antriebsmotor einen sogenannten Stoppmotor zu wählen, der in kürzester Zeit von der Nenndrehzahl auf die Drehzahl 0 angehalten werden kann. In dieser Weise kann die Energiezufuhr schlagartig unterbrochen werden, so dass ein Nacherwärmen (also eine thermische Trägheit) so gut wie ausgeschlossen ist. Eine ähnlich gute Regelung ist dann erzielbar, wenn der Treiber oder der Läufer oder beide Teile in axialer Richtung voneinander weg und aufeinander zu bewegbar sind, so dass die Intensität der Wirbelströme innerhalb der Zwischenwand beeinflusst werden kann. Je nach der Wahl des Antriebes für die Verstellung kann auch in dieser Weise eine sehr rasche Verstellung bewirkt werden, was eine entsprechend trägheitslose Regelung bewirkt. Schliesslich kann die Durchflussmenge bei im übrigen konstanter in die Zwischenwand eingebrachter Energie variiert werden, so dass darüber die Temperaturregelung erfolgt. Diese Art der Anpassung an unterschiedliche Verhältnisse ist jedoch nur dann verwendbar, wenn es auf die Durchflussmenge nicht ankommt, diese also frei wählbar ist.

Da sich innerhalb des erfindungsgemässen Wärmeerzeugers der Treiber und der Läufer während der Wärmeerzeugung in Rotation befinden, ist es sehr leicht möglich, eines der beiden Teile mit einem Propeller oder einem Förderrad zu versehen, um ein gasförmiges oder flüssiges Medium ohne äussere Hilfe durch den Wärmeerzeuger hindurchzubefördern. Es bedarf dann keiner zusätzlichen Pumpe, vorausgesetzt, die für den Durchfluss erforderlichen Drücke sind nicht besonders hoch. Diese Möglichkeit besteht auch bei einem vollständig gekapselten Betrieb, bei dem das Medium durch den Wärmeerzeuger hindurchgeführt wird und nur mit stillstehenden und nicht mit sich bewegenden Dichtungsflächen in Berührung kommt. Die Fördermittel, also z.B. das Schaufelrad ist dann an dem Läufer befestigt, der in dem gekapselten Teil ohne Wellendurchführung nach aussen umläuft.

Eine gekapselte Ausführung des erfindungsgemässen Wärmeerzeugers bringt den Vorteil mit sich, dass er zur Aufheizung von Wärmeträgern benutzt werden kann, die mit Luftsauerstoff nicht in Berührung kommen dürfen; derartige Wärmeträger werden in der chemischen Industrie eingesetzt und sind u.a. unter dem Namen Diphyl bekannt. Zur Aufrechterhaltung chemischer Prozesse wird dieser Wärmeträger zentral erwärmt und dann in isolierten Leitungen den Prozessstellen zugeführt. Dabei kann es bei einer Übertragung über weite Strecken zu einer unbeabsichtigten Abkühlung kommen, die eine Nachwärmung am Prozessort erforderlich macht. Wärmeerzeuger mit Leitungsdurchführungen und dergleichen sind dafür ungeeignet, da ein Kontakt des Diphyls mit der Umgebungsatmosphäre eine Explosion nach sich zieht, die unter allen Umständen vermieden werden muss.

Hier schafft die Erfindung ideale Voraussetzungen. Aufgrund der robusten Konstruktion mit jeweils grossflächigen Abdichtungen und aufgrund der vollständigen Kapselung ist die Gefahr des Austritts bei dem erfindungsgemässen Wärmeerzeuger in etwa so gross wie bei einer normalen Rohrverbindung mit Hilfe von Flanschen. Darüberhinaus ist die eingangs bereits erwähnte verzögerungsfreie Regelung ein weiterer Vorteil, in Verbindung mit dem Wärmeträger eine gefahrlose Primärerwärmung und gegebenenfalls eine Nacherwärmung durchzuführen.

Nachfolgend werden Ausführungsbeispiele der Erfindung, die in der Zeichnung dargestellt sind, näher erläutert; in der Zeichnung bedeuten:

Fig. 1 eine Schnittansicht eines erfindungsgemässen Gerätes zur Erwärmung eines strömenden Mediums in einem ersten Ausführungsbeispiel und

Fig. 2 ein Blockschaltbild eines erfindungsgemässen Aggregates zur Erwärmung eines strömenden Mediums.

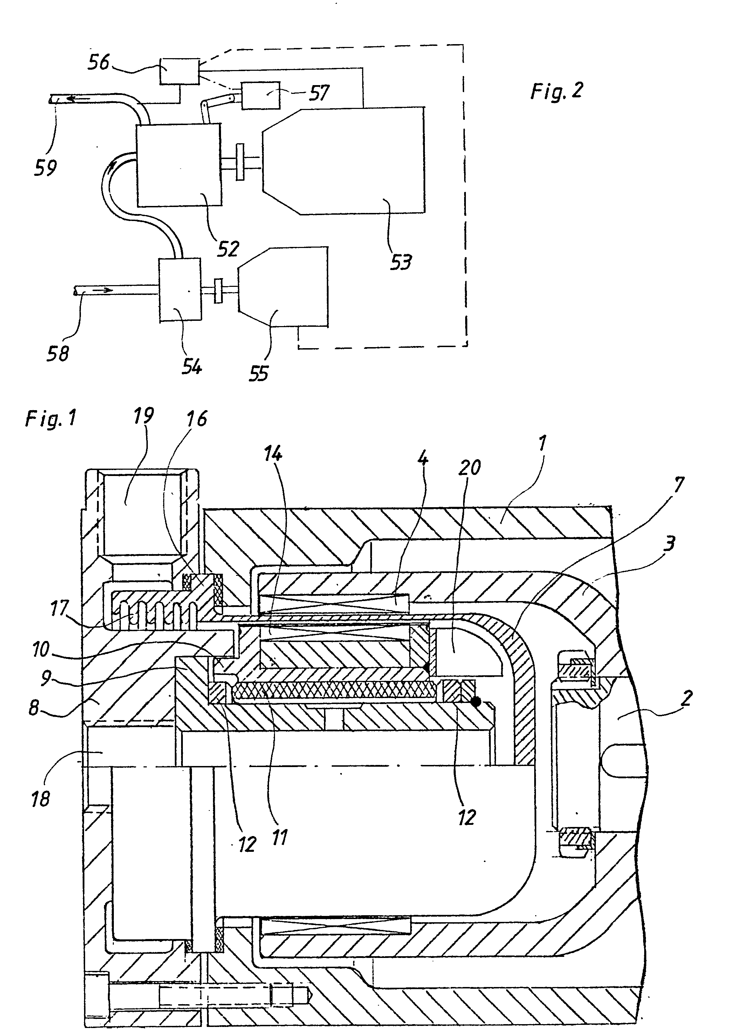

Der in der Fig. 1 dargestellte Wärmeerzeuger ist von einem Gehäuse 1 umgeben, in dem in herkömmlicher Art eine Antriebswelle 2 gelagert ist, die beispielsweise mit Hilfe eines Elektromotors angetrieben wird. An ihr ist ein Treiber 3 befestigt und geführt, der als zylindrische Glocke ausgebildet ist und an dessen vorderem Ende ein in sich geschlossener Ring aus Permanentmagneten 4 angebracht ist. Die Permanentmagnete 4 umgeben einen Topf 7, dessen zylindrische Wand dünn ausgebildet ist und der an seiner rechten Seite durch einen Boden verschlossen ist. An der offenen Seite des Topfes 7 ist ein Flansch (16) vorhanden, der zwischen dem Gehäuse 1 und einem Deckel 8 eingeklemmt ist.

In dem Deckel 8 ist eine Hülse 9 verankert, die als Lager für einen Läufer 10 dient. Dieser ist auf einer zylindrischen Innenfläche mit einer Lagerbuchse 11 versehen, die auf der Lauffläche der Hülse 9 umläuft und mit Hilfe von Stirnlagern 12 in axialer Richtung geführt ist. Der Läufer 10 ist in Höhe der Permanentmagneten 4 des Treibers 3 ebenfalls mit Permanentmagneten 14 besetzt, die abstandslos zu einem in sich geschlossenen Ring aneinandergesetzt sind. Die Permanentmagnete 4 bzw. 14 sind äusserst dicht an den zylindrischen Bereich des Topfes 7 herangeführt, lediglich die Vorbeugung einer Berührung lässt an dieser Stelle einen freien Durchtritt von etwa 1 mm im Durchmesser geraten erscheinen.

Zur Erwärmung eines strömenden Mediums, beispielsweise einer Flüssigkeit, wird das erfindungsgemässe Gerät durchflutet. Dafür ist ein Zulauf 18 vorgesehen, der sich im Zentrum des Deckels 8 befindet und von dem aus die Flüssigkeit durch die Hülse 9 hindurch bis zu dem Boden des Topfes 7 gelangt. Von da aus strömt sie radial nach aussen und tritt nach Erreichen des zylindrischen Bereiches des Topfes 7 durch den Spalt zwischen den Permanentmagneten 14 und dem Topf 7 hindurch in einen Wendelkanal 17 hinein, der Bestandteil des Topfes 7 ist und in dem ein inniger Wärmeaustausch zwischen dem Topf 7 und der Flüssigkeit eintreten kann. Von hier aus gelangt die Flüssigkeit in eine als Sammler dienende Ausnehmung in den Deckel 8 und verlässt über den Ablauf 19 den Wärmeerzeuger.

Zur Wärmeerzeugung wird der Treiber 3 von dem Motor angetrieben, dessen Permanentmagnete 4 infolge der Anziehung auf die Permanentmagnete 14 den Läufer 10 ebenfalls in Drehung versetzen. Damit findet eine Relativbewegung zwischen dem sich drehenden Magnetfeld und dem stehenden Topf 7 statt, die zu einer Wirbelstromerzeugung innerhalb des Topfes 7 führt. Letzterer besteht aus einem elektrisch gut leitfähigen Material, beispielsweise Kupfer oder Aluminium, mit der Folge, dass die erzeugten Wirbelströme kaum einem Widerstand begegnen und somit ungehemmt fliessen können. Auch in dem das Magnetfeld kreuzenden Flüssigkeitsfilm zwischen den Permanentmagneten 14 des Läufers 10 und der Innenseite des Topfes 7 treten Wirbelströme auf, die zu einer direkten Aufheizung der Flüssigkeit führen, wenn sie elektrisch leitfähig ist. Die in dem Topf 7 fliessenden Wirbelströme führen zu einer Aufheizung, die proportional der Relativbewegung zwischen dem Magnetfeld und dem Topf 7 ist, und diese Wärme wird an das flüssige Medium weitergegeben. Dabei werden Temperaturen bis 450 °C und darüber erreicht. Bei fehlendem Fliessdruck des Mediums können an dem Läufer Förderblätter 20 angebracht sein, die einen Förderradeffekt erzeugen und eine Durchflutung des Mediums durch den Wärmeerzeuger bewirken.

An ausgeführten Geräten gemäss der Erfindung sind überraschende Wirkungsgrade erzielt worden. Bezogen auf die gemessene Leistungsaufnahme des Antriebsmotors betrug der Wirkungsgrad bezogen auf die Temperaturdifferenz von Wasser vor Eintritt und nach Austritt aus dem Wärmeerzeugungsgerät und auf die Durchflussmenge pro Zeiteinheit 99,3%. Sieht man von einem kaum messbaren Lagerverschleiss ab, so ist diese Leistung beliebig lange aufrechtzuerhalten, da es keine mechanische Berührung an der Wärmeerzeugungsstelle gibt und auch die Permanentmagnete keinerlei Wartung oder dergleichen benötigen.

Es ist erkennbar, dass das den Wärmeerzeuger durchflutende Medium an keiner Stelle mit einer sich bewegenden Dichtungsfläche in Berührung kommt, also beispielsweise mit einer durch ein Gehäuse hindurchgeführten Welle oder dergleichen. Im Gegenteil sind alle Übergangsstellen mit grossflächigen Flanschdichtungen angedeckt, die erfahrungsgemäss ein sehr hohes Mass an Sicherheit gegen Undichtigkeit aufweisen. Diese Eigenschaft macht den erfindungsgemässen Wärmeerzeuger besonders für die Erwärmung von kritischen Medien geeignet, die aufgrund ihres aggressiven Verhaltens oder ihrer schwierigen Handhabbarkeit nicht mit der Aussenwelt in Berührung kommen dürfen.

Bei flüssigen Medien werden die Lager des Läufers 10 durch das Medium selbst geschmiert. Bei gasförmigen Medien kann eine gesonderte Schmierung vorgesehen sein, auch können statt der Gleitlager Wälzlager zum Einsatz kommen.

Eine axiale Verschieblichkeit des Treibers 3 gegenüber dem Topf 7 (nicht dargestellt) und damit gegenüber dem Läufer 10 kann zur Regelung der zu erzeugenden Wärme dienen. Die in dem Topf 7 erzeugten Wirbelströme, die letztlich für die Erwärmung verantwortlich sind, hängen von der Geschwindigkeit der Relativbewegung zwischen dem Magnetfeld und dem Topf und von der Intensität des Magnetfeldes ab. Mit fallender Intensität werden auch die Wirbelströme geringer, so dass eine entsprechend niedrigere Erwärmung der Zwischenwand eintritt. Die Schwächung des Magnetfeldes kann durch ein axiales Verschieben des Treibers 3 bewirkt werden, da die magnetische Durchflutung zweier sich anziehender Magnete potentiell mit grösser werdendem Abstand abnimmt. Statt einer Axialverschiebung des Treibers kann auch eine Verschiebung des Läufers 10 vorgesehen sein, allerdings ist das nur zu Lasten einer gekapselten Bauweise möglich. Es wurde eingangs schon erwähnt, dass statt einer Magnetfeldschwächung auch eine Drehzahlregulierung zur Regelung der Wärmeerzeugung eingesetzt werden kann; selbstverständlich können auch beide Prinzipien miteinander kombiniert werden.

Bei einer axial verschieblichen Lagerung des Treibers 3 wird dieser über ein Gestänge oder einen Stellmotor in vorgegebene Positionen gebracht. Dadurch tritt dann ein fallender Überdeckungsgrad der Permanentmagnete 4 und 14 voneinander ein, der bezüglich der Magnetfeldstärke dieselbe Wirkung wie ein sich direkt vergrössernder Abstand hat.

In der Fig. 2 ist ein Aggregat zur Erwärmung eines strömenden Mediums als Schema bzw. als Blockschaltbild dargestellt. Die einzelnen Bauteile, die nachfolgend noch genauer erläutert werden, sind z.B. auf einem Rahmen oder innerhalb eines Gehäuses angebracht, so dass insgesamt eine verkaufsfähige, in einem Stück transportable Einheit entsteht mit einem Zulauf, einem Ablauf sowie einem elektrischen Versorgungsanschluss für den Fall, dass das Aggregat elektrisch betrieben wird.

Kernstück des Aggregates bildet ein Gerät 52 gemäss dem vorangehend beschriebenen Ausführungsbeispiel. Über eine Wellenkupplung ist dessen Treiber mit einem Elektromotor 53 verbunden, der auch als Hauptmotor bezeichnet werden kann. Zum Betrieb einer Umwälzpumpe 54 ist nämlich noch ein weiterer Elektromotor 55 vorhanden, der ebenfalls über eine Wellenkupplung mit der Pumpe 54 verbunden ist. Bei gasförmigen Medien ist statt der Pumpe 54 ein Verdichter vorhanden.

Über einen äusseren Anschluss 58 als Zulauf des Mediums gelangt dieses über die Pumpe 54 bzw. über einen Verdichter in das Wärmeerzeugungsgerät 52, aus dem es über den äusseren Anschluss 59 als Ablauf thermostatisch geregelt das Aggregat wieder verlässt. Für die thermostatische Regelung ist eine Temperaturmesseinrichtung 56 vorgesehen, die im Anschluss an das Gerät 52 die Temperatur des Mediums feststellt. In der Fig. 2 sind drei Einwirkungsmöglichkeiten der Temperaturmesseinrichtung 56 auf das restliche Aggregat eingezeichnet.

In ausgezogener Linie ist eine Verbindung von der Temperaturmesseinrichtung 56 zu dem Elektromotor 53 als Sinnbild einer entsprechenden Regeleinrichtung dargestellt. Demnach ist der Elektromotor 53 drehzahlregelbar, so dass bei Überschreiten der Medientemperatur über einen Sollwert die Drehzahl des Motors 53 abgesenkt und bei Unterschreiten entsprechend angehoben wird. Ist statt des Elektromotors 53 ein Verbrennungsmotor vorhanden, wird über die Gemischregelung bzw. bei Dieselmotoren über die Kraftstoffregelung ein entsprechender Einfluss auf die Motordrehzahl genommen.

Bei bestimmten Anwendungsfällen ist die Durchflussmenge des Mediums durch das Aggregat unerheblich, wenn nur die vorgegebene Solltemperatur erreicht wird. In diesem Fall ist eine Regelung über die Durchflussmenge möglich, die durch eine gestrichelte Linie angedeutet ist. Die Temperaturmesseinrichtung 56 nimmt dann nämlich Einfluss auf die Drehzahl der Pumpe 54 bzw. des Verdichters, und zwar in der Weise, dass bei Unterschreiten eines Sollwertes die Durchflussmenge gedrosselt und bei Überschreiten eines Sollwertes die Durchflussmenge erhöht wird. Abweichend davon kann bei einem Elektromotor für die Pumpe mit einer vorgegebenen Nenndrehzahl ein Regelventil in der Verbindungsleitung von der Pumpe 54 zu dem Wärmeerzeuger 52 integriert sein, auf das dann die Temperaturmesseinrichtung 56 Einfluss nimmt.

Schliesslich besteht die Möglichkeit der Einflussnahme, wenn das Wärmeerzeugungsgerät 52 mit z.B. einer axial verschieblichen Lagerung des Treibers gegenüber dem Läufer ausgestattet ist. Diese Regelungsmöglichkeit ist durch eine strichpunktierte Linie symbolisiert. An der Axialverstellung ist ein Stellmotor 57 angebracht, der von der Temperaturmesseinrichtung 56 in der Weise beeinflusst wird, dass bei Unterschreiten eines vorgegebenen Temperatur-Sollwertes eine Annäherung des Treibers an den Läufer und bei Überschreiten eines entsprechenden Sollwertes eine Entfernung des Treibers von dem Läufer bewirkt wird.

Es hat sich gezeigt, dass in bestimmten Anwendungsfällen die Erwärmung der Zwischenwand bzw. des Topfes so stark ist, dass bei ausbleibendem Medium die Schmelztemperatur des betreffenden Materials erreicht wird. Um der dann gegebenen Selbstzerstörungsgefahr zu begegnen, ist es zweckmässig, an der Zwischenwand bzw. an dem Topf 7 an geeigneter Stelle einen Temperaturwächter, beispielsweise in Form eines Thermoelementes, anzubringen, der auf einen weit oberhalb der Betriebstemperatur eingestellten Sollwert in der Weise reagiert, dass die Wärmeerzeugung schlagartig unterbunden wird. Das kann z. B. durch Stillsetzen des Hauptmotors 53, durch ein abruptes Trennen von Treiber und Läufer oder durch Einspritzen einer Kühlflüssigkeit, beispielsweise auf die Treiberseite der Zwischenwand bzw. des Topfes 7, erfolgen. Im letzteren Fall wird zwar nicht die Wärmeerzeugung unterbrochen, es wird jedoch Zeit gewonnen, diesen Schritt einzuleiten.

Vorangehend wurden jeweils Ausführungsbeispiele beschrieben, bei denen das zu erwärmende Medium die Zwischenwand bzw. den Topf 7 von jeweils einer Seite beaufschlagt. Bei leicht zu handhabenden Medien, die darüberhinaus maschinenverträglich sind, also etwa bei Wärmeölen und dergleichen, kann eine Beaufschlagung von beiden Seiten erfolgen, wobei dann der Treiber jeweils innerhalb des Mediums rotiert. Es bedarf dazu nur einer dichten Wellendurchführung durch das Gehäuse und entsprechender Anschlüsse. Abweichend davon können auch zwei separate Ströme jeweils auf der einen Seite der Zwischenwand bzw. des Topfes geführt werden, die sich voneinander bezüglich Art, Konsistenz und der sonstigen Eigenschaften unterscheiden können; auch ist dann die Erwärmung eines schlecht handhabbaren, gefährlichen Mediums neben einem verträglichen Medium möglich.

Grundsätzlich und unabhängig von den Ausführungsbeispielen gilt, dass die Wärmeerzeugung an der Zwischenwand bzw. an dem Topf abhängig ist von der Stärke des Magnetfeldes bei sonst unveränderten Bedingungen. Zur Erzielung einer guten Ausbeute sind daher starke Permanentmagnete vorteilhaft. Bei einem Temperaturbereich bis 200 °C kommen Samarium/Seltenerdenmetall-Kobalt-Legierungen oder Magnetwerkstoffe ähnlicher Konsistenz infrage, während bei einem Temperaturbereich von 200–450 °C und darüber Werkstoffe wie Alnico verwendet werden.

Vorangehend ist beschrieben, dass das zu erwärmende Medium die Zwischenwand bzw. den Topf äusserlich überströmt. Abweichend davon kann die Zwischenwand bzw. der Topf doppelwandig ausgebildet und von dem Medium zusätzlich oder ausschliesslich durchströmt sein. Das gilt auch für darin untergebrachte Kanäle, die durch Bohrungen in massiven oder durch Faltungen einer oder beider Wände bei einer doppelwandigen Zwischenwand bzw. bei einem doppelwandigen Topf gebildet sind.

## Patentansprüche

1. Gerät zur Erwärmung eines strömenden Mediums, mit einer zylinderförmigen, feststehenden Zwischenwand aus einem elektrisch leitenden Material, mit einer Anordnung von auf die Zwischenwand gerichteten Permanentmagneten (4, 14) jeweils auf der Aussenseite und der Innenseite der Zwischenwand und mit einem gesonderten Träger (3, 10) für jede Permanentmagnetanordnung (4, 14), von denen einer mit einem rotierenden Antrieb (2) verbunden ist, durch dessen Drehung in der von dem zu erwärmenden Medium überströmten Zwischenwand infolge von Wirbelströmen eine Erwärmung eintritt, dadurch gekennzeichnet, dass der als Treiber (3) ausgebildete Träger der äusseren Permanentmagnetanordnung (4) mit dem Antrieb (2) verbunden ist, und dass der als Läufer (10) ausgebildete Träger der inneren Permanentmagnetanordnung (14) frei drehbar gelagert ist und infolge der Magnetkräfte synchron mit dem Treiber nach Art von üblichen Permanentmagnetkupplungen umläuft.

2. Gerät nach Anspruch 1, dadurch gekennzeichnet, dass die Zwischenwand als rohrförmiger, einseitig verschlossener Topf (7) ausgebildet ist, dass die Zuleitung (18, 9) für das Medium durch den Läufer (10) hindurch bis zu dem Topfboden geführt ist und dass auf der offenen Seite des Topfes (7) ein mit dem Spalt zwischen Läufer (10) und Topfwand verbundener Sammler angeordnet ist, an dem der Auslauf (19) für das Medium angeschlossen ist.

3. Gerät nach Anspruch 1 oder 2, dadurch gekennzeichnet, dass die Zwischenwand bzw. der Topf (7) aus einem Material mit einem niedrigen spezifischen elektrischen Widerstand wie Kupfer oder Aluminium besteht.

4. Gerät nach einem der vorhergehenden Ansprüche, dadurch gekennzeichnet, dass die Zwischenwand bzw. der Topf (7) zur Oberflächenvergrösserung auf der medienbeaufschlagten Seite mit Rippen (17) oder Schraubengängen versehen ist.

5. Gerät nach einem der vorhergehenden Ansprüche, dadurch gekennzeichnet, dass die Permanentmagnetanordnung jeweils aus einer Vielzahl von Permanentmagnetplättchen (4, 14), die abstandslos zu einem oder mehreren Ringen zusammengesetzt sind, oder aus jeweils einem Magnetring besteht.

6. Gerät nach einem der vorhergehenden Ansprüche, dadurch gekennzeichnet, dass der Treiber (3) und der Läufer (10) axial zueinander verschieblich und feststellbar angeordnet sind.

7. Gerät nach einem der vorhergehenden Ansprüche, dadurch gekennzeichnet, dass als Antrieb (2) des Treibers (3) ein elektrisch oder durch Verbrennung betriebener Hauptmotor (53) vorgesehen ist.

8. Gerät nach Anspruch 7, dadurch gekennzeichnet, dass zwischen einem Zulaufanschluss (58) für das zu erwärmende Medium und dem Gerät (52) eine Umwälzpumpe (54) mit einem eigenen Antriebsmotor (55) vorgesehen ist.

9. Gerät nach Anspruch 7 oder 8, dadurch gekennzeichnet, dass zwischen dem Gerät (52) und einem Ablaufanschluss (59) für das erwärmte Medium eine Temperaturmesseinrichtung (56) angeordnet ist, dass der Hauptmotor (53) eine Regeleinrichtung aufweist, und dass bei Überschreiten eines vorgegebenen Temperatur-Toleranzfeldes nach oben oder unten die Drehzahl des Hauptmotors (53) gesenkt oder angehoben wird bzw. der Hauptmotor (53) aus- oder eingeschaltet wird.

10. Gerät nach Anspruch 7 oder 8, dadurch gekennzeichnet, dass zwischen dem Gerät (52) und einem Ablaufanschluss (59) für das erwärmte Medium eine Temperaturmesseinrichtung (56) angeordnet ist, dass innerhalb des Strömungsweges des Mediums durch das Gerät (52) eine Mengenregelung für den Durchfluss des Mediums vorgesehen ist, durch die bei Überschreiten eines vorgegebenen Temperatur-Toleranzfeldes nach oben oder unten der Durchfluss pro Zeiteinheit vergrössert oder verkleinert wird.

11. Gerät nach Anspruch 8 und 10, dadurch gekennzeichnet, dass die Mengenregelung durch eine Drehzahländerung des Antriebsmotors (55) für die Umwälzpumpe (54) erfolgt.

12. Gerät nach Anspruch 7 oder 8, dadurch gekennzeichnet, dass zwischen dem Gerät und einem Ablaufanschluss (59) für das erwärmte Medium eine Temperaturmesseinrichtung (56) angeordnet ist, dass der Treiber und Läufer axial zueinander verschieblich angeordnet und über einen Stellmotor (57) in ihren Relativlagen einstellbar sind, der bei Überschreiten eines vorgegebenen Temperatur-Toleranzfeldes nach oben oder unten eine weite oder geringe Abstandslage durch den Stellmotor (57) bewirkt wird.

13. Gerät nach einem der vorhergehenden Ansprüche, dadurch gekennzeichnet, dass an der Zwischenwand ein Temperaturwächter angeordnet ist, der bei Überschreiten eines Sollwertes den Hauptmotor (53) abschaltet.

14. Gerät nach einem der vorhergehenden Ansprüche, dadurch gekennzeichnet, dass die Zwischenwand bzw. der Topf (7) mit Kanälen durchsetzt bzw. doppelwandig ausgebildet ist und dass das Medium zusätzlich oder ausschliesslich durch das Innere der Zwischenwand bzw. des Topfes (7) strömt.

**Claims**

1. Apparatus for heating a flowing medium, comprising a cylindrical, stationary intermediate wall of an electrically conducting material, comprising an assembly of permanent magnets (4, 14) directed onto the intermediate wall on its outer side and on its inner side, and comprising a separate support (3, 10) for each permanent magnet assembly (4, 14), of which supports one is connected with a rotating drive (2), by the rotation of which heating up takes place due to eddy currents in the intermediate wall over which the medium to be heated flows, characterized in that the support, constructed as a driver (3), of the outer permanent magnet assembly (4) is connected with the drive (2), and that the support, constructed as a rotor (10), of the inner permanent magnet assembly (14) is journalled freely rotatable and revolves synchronously with the driver in the manner of conventional permanent magnet couplings as a consequence of the magnetic forces.

2. Apparatus according to Claim 1, characterized in that the intermediate wall is formed as a tubular pot (7), closed at one end, that the feed line (18, 9) for the medium is conducted through the rotor (10) as far as the pot base, and that a collecting header connected with the gap between rotor (10) and pot wall is disposed on the open side of the pot (7), to which (collecting header) the outlet (19) for the medium is connected.

3. Apparatus according to Claim 1 or 2, characterized in that the intermediate wall or pot (7) is of a material having a low specific electrical resistance, such as copper or aluminium.

4. Apparatus according to one of the preceding claims, characterized in that the intermediate wall or pot (7) is furnished with ribs (17) or screw threads on the side over which the medium flows in order to increase the surface area.

5. Apparatus according to one of the preceding claims, characterized in that the permanent magnet assemblies each consist of a plurality of permanent magnet platelets (4, 14), which are assembled without gaps to form one or more rings, or of a magnetic ring.

6. Apparatus according to one of the preceding claims, characterized in that the driver (3) and the rotor (10) are arranged to be axially displaceable relative to each other and capable of being fixed.

7. Apparatus according to one of the preceding claims, characterized in that a main motor (53), driven electrically or by combustion, is provided as the drive (2) for the driver (3).

8. Apparatus according to Claim 7, characterized in that a circulating pump (54) with its own drive motor (55) is provided between a feed connection (58) for the medium to be heated and the apparatus (52).

9. Apparatus according to Claim 7 or 8, characterized in that a temperature measuring device (56) is disposed between the apparatus (52) and a discharge connection (59) for the heated medium, that the main motor (53) possesses a regulating device, and that when the temperature rises above or falls below a predetermined temperature tolerance zone, the rotational speed of the main motor (53) is lowered or raised or the main motor (53) is switched off or switched on respectively.

10. Apparatus according to Claim 7 or 8, characterized in that a temperature measuring device (56) is disposed between the apparatus (52) and a discharge connection (59) for the heated medium, that within the flow path for the medium through the apparatus (52) a flow regulator for the flow of the medium is provided, by which, if the temperature rises above or falls below a predetermined tolerance zone, the flow per unit time is increased or reduced.

11. Apparatus according to Claims 8 and 10, characterized in that the flow regulation is effected by a change in speed of the drive motor (55) for the circulating pump (54).

12. Apparatus according to Claim 7 or 8, characterized in that a temperature measuring device (56) is disposed between the apparatus and a discharge connection (59) for the heated medium, that the driver and the rotor are disposed axially displaceable relative to each other and are adjustable in their relative positions by an actuating motor (57) which, if the temperature rises above or falls below a predetermined temperature tolerance zone, causes an increase or decrease in the displacement by the actuating motor (57).

13. Apparatus according to one of the preceding claims, characterized in that a temperature monitor is disposed on the intermediate wall, which switches off the main motor (53) if a set-point value is exceeded.

14. Apparatus according to one of the preceding claims, characterized in that the intermediate wall or pot (7) is traversed by ducts or is of double-wall construction, and that the medium flows additionally or exclusively through the interior of the intermediate wall or pot (7).

**Revendications**

1. Appareil pour chauffer un fluide coulant comprenant une paroi intermédiaire cylindrique fixe en une matière conductrice d'électricité, un ensemble d'aimants permanents (4, 14) disposé en regard de la paroi intermédiaire du côté extérieur et du côté intérieur de la paroi intermédiaire et un support séparé (3, 10) pour chaque ensemble d'aimants permanents (4, 14) dont l'un est relié à un entraînement rotatif (2) dont la rotation produit, grâce à des courants de foucault, un chauffage de la paroi intermédiaire sur laquelle s'écoule le fluide à chauffer, caractérisé en ce que le support formé par un rotor (3) de l'ensemble d'aimants permanents extérieur (4) est relié à l'entraînement (2) et que le support formant l'induit (10) de l'ensemble d'aimants permanents intérieur (14) est monté fou et est entraîné par les forces magnétiques en synchronisme avec le rotor à la manière d'un accouplement classique par aimants permanents.

2. Appareil suivant la revendication 1, caractérisé en ce que la paroi intermédiaire est constituée d'un pot tubulaire (7) fermé à l'une de ses extrémités, le conduit d'alimentation du fluide s'étend à travers le rotor (10) jusqu'au fond du pot et à l'extrémité ouverte du pot (7) est prévu un collecteur relié à l'espace ménagé entre le rotor (10) et la paroi du pot et qui communique avec la canalisation d'évacuation (19) du fluide.

3. Appareil suivant l'une quelconque des revendications 1 ou 2, caractérisé en ce que la paroi intermédiaire ou le pot (7) est réalisée en une matière présentant une faible résistance électrique spécifique telle que le cuivre ou l'aluminium.

4. Appareil suivant l'une quelconque des revendications précédentes, caractérisé en ce que la paroi intermédiaire ou le pot (7) présente sur sa face en contact avec le fluide, des nervures (17) ou un pas de vis pour obtenir une augmentation de sa surface.

5. Appareil suivant l'une quelconque des revendications précédentes, caractérisé en ce que chaque ensemble d'aimants permanents est constitué soit d'une série de plaquettes aimantées (4, 14) qui sont assemblées sans écartement pour former une ou plusieurs bagues, soit d'une bague aimantée.

6. Appareil suivant l'une quelconque des revendications précédentes, caractérisé en ce que l'excitateur (3) et l'induit (10) sont montés mobiles et réglables en direction axiale l'un par rapport à l'autre.

7. Appareil suivant l'une quelconque des revendications précédentes, caractérisé en ce que l'entraînement (2) de l'excitateur (3) est constitué d'un moteur principal (53) électrique ou à combustion interne.

8. Appareil suivant la revendication 7, caractérisé en ce qu'il comprend entre un raccord d'arrivée (58) pour le fluide à chauffer et l'appareil lui-même (52) une pompe de refoulement (54) avec son propre moteur d'entraînement (55).

9. Appareil suivant l'une quelconque des revendications 7 ou 8, caractérisé en ce qu'il comprend entre l'appareil lui-même (52) et un raccord d'évacuation (59) pour le fluide à chauffer un dispositif de mesure de température (56), que le moteur principal (53) comporte un dispositif de régulation et que, lors du dépassement vers le haut ou vers le bas de limites de tolérances de température prédéterminées, la vitesse de rotation du moteur principal (53) est abaissée ou augmentée ou le moteur principal (53) est arrêté ou mis en route.

10. Appareil suivant l'une quelconque des revendications 7 ou 8, caractérisé en ce qu'il comporte entre l'appareil lui-même (52) et un raccord d'évacuation (59) pour le fluide à chauffer, un dispositif de mesure de température (56) et dans le chemin d'écoulement du fluide à travers l'appareil (52) un moyen pour le réglage du débit du fluide qui commande, lors du dépassement vers le haut ou vers le bas de limites de tolérances de température prédéterminées, une augmentation ou une réduction du débit par unité de temps.

11. Appareil suivant les revendications 8 et 10, caractérisé en ce que le réglage de débit est obtenu par une modification de la vitesse de rotation du moteur d'entraînement (55) de la pompe de refoulement.

12. Appareil suivant l'une quelconque des revendications 7 ou 8, caractérisé en ce qu'il comprend entre l'appareil lui-même et un raccord d'évacuation (59) pour le fluide à chauffer un dispositif de mesure de température (56), que l'excitateur et l'induit sont montés mobiles en direction axiale l'un par rapport à l'autre et réglables dans des positions relatives par un moteur de commande (57) qui commande, lors du dépassement vers le haut ou vers le bas de limites de tolérances de température prédéterminées, un écartement plus grand ou plus petit.

13. Appareil suivant l'une quelconque des revendications précédentes, caractérisé en ce qu'il comprend sur la paroi intermédiaire, un détecteur de température qui commande lors du dépassement d'une valeur prédéterminée, l'arrêt du moteur principal (53).

14. Appareil suivant l'une quelconque des revendications précédentes, caractérisé en ce que la paroi intermédiaire ou le pot (7) comporte des canaux ou une double paroi et que le fluide traverse au moins de façon accessoire le pot (7) ou la paroi intermédiaire.

Fig. 2

Fig. 1